# EUROPEAN PATENT SPECIFICATION

(11) **EP 3 851 278 B1**
(45) Date of publication and mention of the grant of the patent: **08.06.2022**
(21) Application number: 20217222.7
(22) Date of filing: 24.12.2020
(51) Int. Cl.: B41F 19/06, B41F 16/00

(54) **FOIL STAMPING MECHANISM**
FOLIENPRÄGEMECHANISMUS
MÉCANISME D'ESTAMPAGE

(30) Priority: 20.01.2020 CN 202010062724
(43) Date of publication of application: 21.07.2021
(73) Proprietor: Foshan Tianzheng Machinery Co., Ltd, Foshan City, Guangdong 528306 (CN)
(72) Inventor: LAO, Yingzi, Foshan City, Guangdong 528306 (CN)
(74) Representative: Romano, Giuseppe

(56) References cited:
- CN-A- 103 802 458
- CN-A- 109 605 831
- US-A- 5 207 855

## Description

### TECHNICAL FIELD

The present disclosure relates to a stamping mechanism, and more particularly, to a film stamping mechanism for rolls.

### BACKGROUND

A stamping process is a special printing process without ink, which refers to a technological process of stamping an electro-chemical aluminum foil to a substrate surface under a certain pressure and temperature. Pictures and texts after the stamping process present strong metallic luster effect with brighter colors and being durable without fade for long terms. In particular, hot stamping foil with magnificent and elegant decoration thereof embellished on a surface of a printed matter enhances an artistic quality of the printed matter, and highlights a publicity effect of a theme, so that a finished product looks higher-grade and brings people the enjoyment of beauty. The stamping process has been widely used in high-grade and exquisite packaging and decoration, trademarks, calendars, book covers and other printed matters. In order to make packaging appearances of products attract more consumers, the stamping process is also applied to plastic bags, paper bags or woolen cloth bags of packaging materials.

As stated in Chinese utility model patent with publication number CN208216266U, an existing film stamping machine for bags includes a film unwinding mechanism, a stamping mechanism and a rewinding mechanism. The stamping mechanism is located between the film unwinding mechanism and the rewinding mechanism. The film unwinding mechanism includes a feeding roller and a plurality of conveying rollers, and the feeding roller is connected with a magnetic powder brake. The stamping mechanism includes a base, a lifting seat, and a power rod fixed on the lifting seat and passing through a through hole of the base. A plurality of groups of stamping molds are arranged between the base and the lifting seat; a film leading-in roller is arranged in front of the stamping mold, and an aluminum foil moving mechanism is arranged above the stamping mold. The aluminum foil driving mechanism includes an aluminum foil release roller and a collecting roller. The aluminum foil release roller is connected with the magnetic powder brake, and the collecting roller is connected with a servo motor. The rewinding mechanism includes a rewinding roller connected with a motor. A film roll is sleeved on the feeding roller of the film unwinding mechanism, and the film is pulled through the conveying rollers and the stamping molds, and then fixed on a sleeve of the collecting roller of the rewinding mechanism. Next, an aluminum foil roll is tightly sleeved on the aluminum foil release roller, then the aluminum foil sheet is fixed on the collecting roller after passing through the stamping mold of the stamping mechanism, and then the film is passed through the stamping mold through the leading-in roller. When the servo motor connected with the collecting roller and the motor connected with the rewinding roller are running, the aluminum foil and the film will slowly pass by the stamping mold, as the film and the aluminum foil move, the stamping mold will fix a hot stamping foil layer on the aluminum foil onto the film, thus printing various patterns and texts on the film. The whole printing process is fully automatically controlled, without manual participation, and the production efficiency is high.

For example, CN109605831A discloses a film heat seal molding machine that is capable of heat sealing a tab to the bottom or interior of a package, CN103802458A discloses a stamping machine for stamping characters or patterns on film articles such as plastics, and US5207855A discloses an apparatus for sticking stamps onto a substrate at predetermined isolated locations.

However, it is difficult to precisely stamp the specific pattern on the aluminum foil to a corresponding position on the film with the stamping machine mentioned above because the stamping machine mentioned above will produce a certain displacement tolerance in the process of work, and the displacement tolerance will become larger and larger with the continuous progress of the work, then the position of the pattern stamped on the film roll will deviate more and more seriously, which is difficult to find and adjust in time, thus affecting a quality of the stamped product.

### SUMMARY

An objective of the present disclosure is to provide a film stamping mechanism capable of precisely stamping a pattern on an electrochemical aluminum foil to a corresponding position on a film roll.

The present disclosure achieves the above-mentioned objective in this way:
A foil stamping mechanism includes a base and a lifting seat, a power rod fixed on the lifting seat and passing through a through hole of the base, wherein a plurality of groups of stamping molds are arranged between the base and the lifting seat, an aluminum foil driving mechanism is arranged above the stamping mold, the aluminum foil driving mechanism includes a connecting plate which is provided with an aluminum foil release roller, a collecting roller and a plurality of guiding rollers, the aluminum foil release roller is connected with a magnetic powder brake, the collecting roller is connected with a servo motor, a monitoring device is installed on one side of the connection plate, the monitoring device includes a photoelectric switch, the photoelectric switch can be movably installed on a guide rod through a sliding sleeve, the guide rod is fixedly connected with a lifting block through a connecting block, the lifting block is sleeved on a sliding rod, two ends of the sliding rod are fixedly connected with a mounting block, the mounting block is fixedly connected with the connecting plate, and the mounting block is provided with a vertical screw stem to adjust lifting of the lifting block.

A light barrier and round rods are installed on the connecting block in front of the photoelectric switch, two round rods are provided, and are respectively located on upper and lower sides of the light barrier.

Three guiding rollers are arranged on upper and lower sides of the round rod, one lower guiding roller is located in front of the stamping mold, one end of the guiding roller is installed on a connector through a strip groove, the other end of the guiding roller is installed on a square strip, and the other end of the square strip is also fixed to the connecting plate through another strip groove; two upper guiding rollers are provided on a plane at a certain angle as a horizontal plane, one end of the guiding roller is installed on the connector, and the other end of the guiding roller is installed on the connecting plate by an outwardly extended convex block.

The connecting plate is provided with an aluminum foil tension adjusting device, the adjusting device includes a limiting cylinder and a swinging roller, a free end of the limiting cylinder is movably connected with a swinging arm, and the other end of the limiting cylinder is movably connected with the connecting plate; the swinging roller is installed at one end of the swinging arm and the other end of the swinging arm is movably installed on an extension block of the connecting plate, the other end of the swinging arm is also fixed with a fork block, a bearing is arranged in a fork mouth of the fork block, the bearing is fixedly connected with a telescopic rod of a potentiometer by a connecting arm, and the potentiometer is fixed on a platform above the connecting plate.

Both the release roller and the collecting roller are sleeved with two opposite conical gears, and the conical gears are fixed on the release roller or the collecting roller by screws passing through screw holes of the conical gears.

Two sides of a top portion of the stamping mold are connected with vertical plates, the vertical plate perforates a through hole of an upper slide plate and is fixedly connected with a hanging strip, and a bottom portion of the upper slide plate is provided with a slide seat, the slide is sleeved on a slide track of the lifting seat, an upper surface of the upper slide plate is provided with a stamping mold plate lock, the stamping mold plate lock is provided with a through hole for a screw stem to pass through, the through hole is provided with a grain matched with a thread of the screw stem, and one end of the screw stem is provided with a rotating handle or a hand wheel.

The stamping mold plate is mainly composed of upper and lower locking blocks hinged together, the lower locking block is fixed on a surface of the upper slide plate, opposite positions of the upper and lower locking blocks are respectively provided with semicircular grooves, the upper and lower semicircular grooves form the through hole, the grain matched with the thread of the screw stem is arranged on an inner wall of the groove of the upper locking block, and free ends of the upper and lower locking blocks are provided with magnets for attracting each other.

A heat-resistant silicon block is installed between a heating plate of the stamping mold and the lifting seat.

A surface of the lifting seat is provided with a graduated scale, and the upper slide plate is provided with a pointer pointing to the graduated scale.

Bearing blocks are fixed on both sides of a heating plate of the stamping mold, a convex strip is arranged inside the bearing block, and the convex strip is inserted into a groove of a hot stamping template to connect the heating plate and the hot stamping template.

The present disclosure has the beneficial effects that: firstly, the photoelectric switch of the monitoring device is adjusted to align the pattern on the aluminum foil. When the pattern on the aluminum foil passes in front of the photoelectric switch of the monitoring device, the monitoring device can accurately measure a distance between two adjacent patterns, and then control an advance length of the film roll according to the distance. Advance lengths of the aluminum foil roll and the film roll are determined by the distance between the two adjacent patterns on the aluminum foil, so that the stamping mold can precisely stamp the pattern on the aluminum foil onto the film roll, without displacement tolerance in the working process, which is practical and reliable. The photoelectric switch can move left and right by loosening the connection between the sliding sleeve and the guide rod; and the upper and lower positions of the photoelectric switch can be adjusted by transferring the vertical screw stem, so as to adapt to stamping the patterns at different positions of the aluminum foil.

### BRIEF DESCRIPTION OF THE DRAWINGS

The present disclosure is further explained with reference to the drawings and embodiments hereinafter.
FIG. 1 is a three-dimensional structural diagram of a first embodiment of the present disclosure;
FIG. 2 is an enlarged drawing at a portion A of FIG. 1;
FIG. 3 is a three-dimensional structural diagram of the first embodiment of the present disclosure from another angle;
FIG. 4 is a three-dimensional structural diagram of the first embodiment of the present disclosure after removing some parts;
FIG. 5 is a three-dimensional structural diagram of a second embodiment of the present disclosure;
FIG. 6 is an enlarged drawing at a portion B of FIG. 5; and
FIG. 7 is an enlarged drawing at a portion C of FIG. 5.

### DETAILED DESCRIPTION

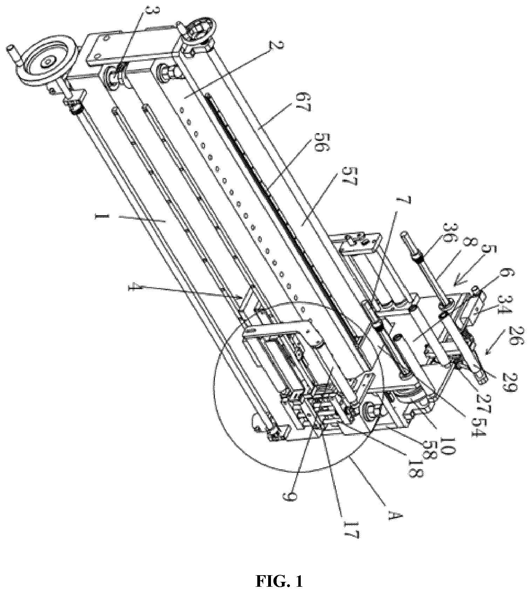

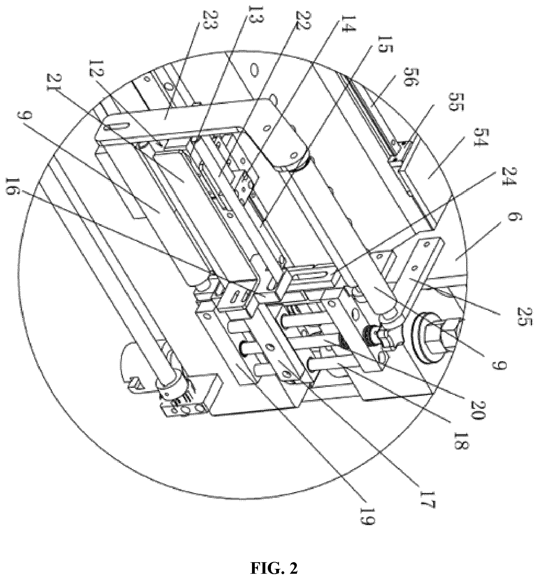

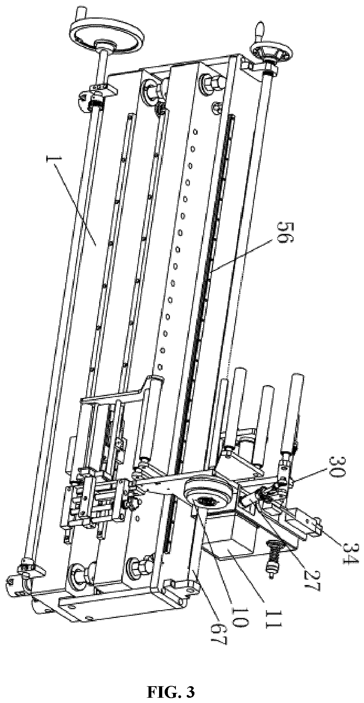

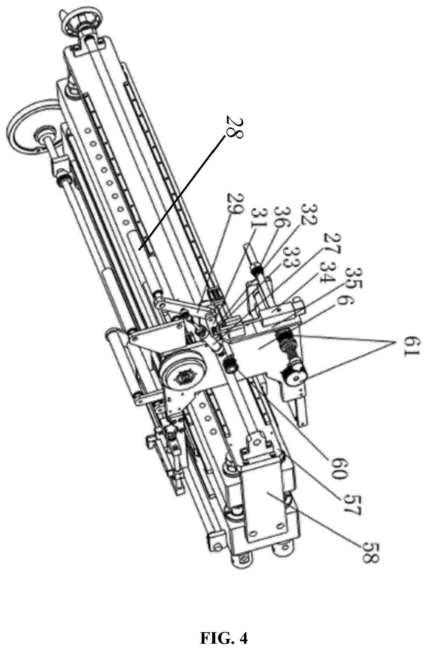

Referring to FIG. 1 to FIG. 4, a foil stamping mechanism includes a base 1 and a lifting seat 2, a power rod 3 fixed on the lifting seat 2 and passing through a through hole of the base 1 wherein a plurality of groups of stamping molds 4 are arranged between the base 1 and the lifting seat 2, and an aluminum foil driving mechanism 5 is arranged above the stamping mold 4. The aluminum foil driving mechanism 5 includes a connecting plate 6. The connecting plate 6 is provided with an aluminum foil release roller 7, a collecting roller 8 and a plurality of guiding rollers 9. The aluminum foil release roller 7 is connected with a magnetic powder brake 10, and the collecting roller 8 is connected with a servo motor 11. A monitoring device 12 is installed on one side of the connection plate 6, and the monitoring device 12 includes a photoelectric switch 13. The photoelectric switch 13 can be movably installed on a guide rod 15 through a sliding sleeve 14, the guide rod 15 is fixedly connected with a lifting block 17 through a connecting block 16, and the lifting block 17 is sleeved on a sliding rod 18. Two ends of the sliding rod 18 are fixedly connected with a mounting block 19, the mounting block 19 is fixedly connected with the connecting plate 6, and the mounting block 19 is provided with a vertical screw stem 20 to adjust lifting of the lifting block 17. Firstly, the photoelectric switch 13 of the monitoring device 12 is adjusted to align a pattern on an aluminum foil. When the pattern on the aluminum foil passes in front of the photoelectric switch 13 of the monitoring device, the monitoring device can accurately measure a distance between two adjacent patterns, and then control an advance length of a film roll according to the distance. Advance lengths of an aluminum foil roll and the film roll are determined by the distance between the two adjacent patterns on the aluminum foil, so that the stamping mold can precisely stamp the pattern on the aluminum foil onto the film roll, without displacement tolerance in the working process, which is practical and reliable. The photoelectric switch 13 can move left and right by loosening the connection between the sliding sleeve 14 and the guide rod 15; and the upper and lower positions of the photoelectric switch 13 can be adjusted by adjusting the vertical screw stem 20, so as to adapt to stamping the patterns at different positions of the aluminum foil. The connecting plate 6 is fixed on a supporting plate 54, a lower part of the supporting plate 54 is fixedly connected with a sliding seat 55, the sliding seat 55 is sleeved on a guide rail 56, sliding relative to the guide rail 56, the guide rail 56 is fixed on the supporting plate 57, and the supporting plate 57 is fixedly connected with the base 1 through vertical plates 58 at both ends. Two guide rails 56 are provided, and the same guide rail 56 is connected with the supporting plate 54 by two sliding seats 55. The connecting plate 6 is connected with a driving screw stem 67. By transferring a hand wheel of the driving screw stem 67, the driving screw stem 67 drives the connecting plate 6 to move along the guide rail 56, so as to meet the requirements of stamping different films. The servo motor 11 is connected with a driving gear 60, and the driving gear 60 is connected with two driven gears 61 through a drive belt.

In order to make the photoelectric switch 13 more accurately detect the pattern on the aluminum foil, a light barrier 21 and round rods 22 are installed on the connecting block 16 in front of the photoelectric switch 13, two round rods 22 are provided and are respectively located on upper and lower sides of the light barrier 21. When the aluminum foil passes between the photoelectric switch 13 and the light barrier 21, the light barrier 21 can effectively reduce an influence of external light on the photoelectric switch 13, ensuring that the photoelectric switch 13 can monitor the pattern on the aluminum foil more precisely and measure the distance between two adjacent patterns. The two round rods on the upper and lower sides of the light barrier enable the pattern on the aluminum foil to face the photoelectric switch positively, which is more convenient for the photoelectric switch to measure.

In order to further facilitate the photoelectric switch to measure the distance between two adjacent patterns on the aluminum foil and feed the patterns to the stamping mold more precisely so as to stamp the patterns onto the film roll, three guiding rollers 9 are arranged on upper and lower sides of the round rod 22, wherein one lower guiding roller is located in front of the stamping mold 4, one end of the guiding roller is installed on a connector 23 through a strip groove, the other end of the guiding roller is installed on a square strip 24, and the other end of the square strip 24 is also fixed to the connecting plate 6 through another strip groove. Two upper guiding rollers 9 are provided on a plane at a certain angle as to a horizontal plane, one end of the guiding roller is installed on the connector 23, and the other end of the guiding roller is installed on the connecting plate 6 by an outwardly extended convex block 25, thus ensuring that the aluminum foil passes smoothly and accurately in front of the photoelectric switch.

In order to further ensure the smooth and accurate running of the aluminum foil, and provide convenience for the photoelectric switch 13 to monitor the pattern on the aluminum foil, the connecting plate is provided with an aluminum foil tension adjusting device 26. The adjusting device 26 includes a limiting cylinder 27 and a swinging roller 28. A free end of the limiting cylinder 27 is movably connected with a swinging arm 29, and the other end of the limiting cylinder 27 is movably connected with the connecting plate 6. The swinging roller 28 is installed at one end of the swinging arm 29, and the other end of the swinging arm 29 is movably installed on an extension block 30 of the connecting plate 6. The other end of the swinging arm 29 is also fixed with a fork block 31, a bearing 32 is arranged in a fork mouth of the fork block 31, and the bearing 32 is fixedly connected with a telescopic rod of a potentiometer 34 by a connecting arm 33. The potentiometer 34 is fixed on a platform 35 above the connecting plate 6. When a tension of the running aluminum foil is lower than a certain value or appears in a loose state, the telescopic rod of the potentiometer 34 will be extended, and a brake resistance of the magnetic powder brake 10 at this moment also increase in correspondence to make the running aluminum foil pull tighter; otherwise, vice versa.

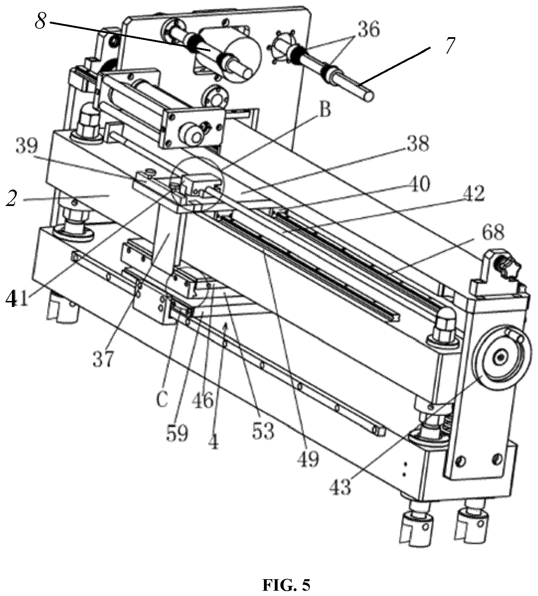

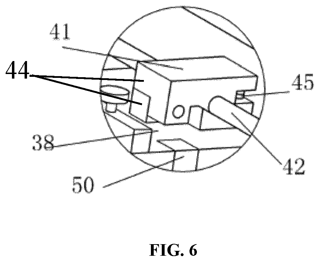

Referring to FIG. 5 to FIG. 6, in order to firmly fix a foil feeding roll and a waste rewinding roll on the release roller 7 and the collecting roller 8 respectively, both the release roller and the collecting roller are sleeved with two opposite conical gears 36, and the conical gears 36 are fixed on the release roller 7 or the collecting roller 8 by screws passing through screw holes of the conical gears. In case of mounting the foil rolls, the outside gears 36 are loosen firstly, and then the outside gears are taken out from the release roller 7 and the collecting roller 8. Then, the outside gears 36 are reinstalled to press the two relative gears 36 on the same roller to tighten the screws on the gears 36 while pressing the foil roll tightly, so that the foil rolls can be firmly fixed on the release roller 7 or the collecting roller 8.

Two sides of a top portion of the stamping mold 4 are connected with vertical plates 37. The vertical plate 37 perforates a through hole of an upper slide plate 38 and is fixedly connected with a hanging strip 39. Abottom portion of the upper slide plate 38 is provided with a slide seat 40, and the slide 40 is sleeved on a slide track 68 of the lifting seat 2. An upper surface of the upper slide plate 38 is provided with a stamping mold plate lock 41, and the stamping mold plate lock 41 is provided with a through hole for a screw stem 42 to pass through. The through hole is provided with a grain matched with a thread of the screw stem 42, and one end of the screw stem 42 is provided with a rotating handle or a hand wheel 43. By rotating the handle or the hand wheel 43, the screw stem 42 will drive the stamping mold plate lock to move. Because the stamping mold plate lock 41 is installed on the surface of the upper slide plate 38, the movement of the stamping mold plate lock 41 will drive the upper slide plate 38 to slide along the slide track on the lifting seat 2. As the upper slide plate 38 slides, the upper slide plate will drive the stamping mold 4 under the lifting seat 2 to move the vertical plate 37. The stamping mold 4 includes a heating plate 46, a hot stamping template 53 and a base plate 59. In a word, as long as the handle or the hand wheel 43 is rotated, the stamping mold 4 can be adjusted and moved to an appropriate position to precisely press a stamping foil onto a packaging film.

The stamping mold plate lock 41 is mainly composed of upper and lower locking blocks 44 hinged together. The lower locking block is fixed on the surface of the upper slide plate 38. Opposite positions of the upper and lower locking blocks are respectively provided with semicircular grooves. The upper and lower semicircular grooves form the through hole. The grain matched with the thread of the screw stem is arranged on an inner wall of the groove of the upper locking block, and free ends of the upper and lower locking blocks are provided with magnets 45 for attracting each other. When the magnets 45 make the upper and lower locking blocks buckle together, the stamping mold plate lock 41, the upper slide plate 38, the hanging strip 39, the vertical plate 37, the heating plate 46 and the hot stamping template 53 will move with the rotation of the screw stem 42. When the magnets 45 are separated to make the grain on the inner wall of the groove of the upper locking block disengage from the screw stem 42, the above-mentioned parts will not move along with the rotation of the screw stem 42, but the above-mentioned parts can be directly pushed together by human hands for long-distance movement without fine adjustment by the screw stem, which can further facilitate position adjustment of the stamping mold.

Moreover, a screw hole is drilled on the hanging strip 39, and a screw is installed on the screw hole. The screw can be contacted with the upper slide plate 38 through the screw hole. The screw is fixed, so that the screw is tightly pressed on the upper slide plate 38. At this time, the heating plate 46 will stick to the lower part of the lifting seat 2, thus effectively preventing the hot stamping template 53 from moving in the process of work, to ensure that the pattern on the aluminum foil is precisely stamped on the packaging film. At the same time, workers can be effectively prevented from mistakenly rotating the handle or the hand wheel to drive the hot stamping template 53. Even if the screw stem 42 is rotated, because the screw stem 42 is tightly pressed on the upper slide plate 38 and the heating plate 46 is stuck to the lower part of the lifting seat 2, the hot stamping template 53 will not move at this moment, the upper locking block will get rid of magnetic suction of the magnets 45 and jump up under an acting force of the screw stem, to make the grain in the groove of the upper locking block disengaged from the thread of the screw stem, so that the hot stamping template 53 can be prevented from generating unnecessary movement to ensure precise stamping, and meanwhile, the screw stem can be prevented from damage.

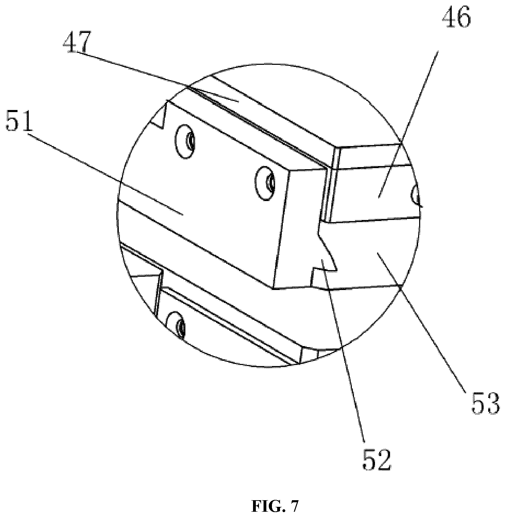

With further reference to Figure 7, in order to make the heating plate 46 more effectively adhere to the lower part of the lifting seat 2 and prevent heat from being transferred to the lifting seat 2, a heat-resistant silicon block 47 is installed between the heating plate 46 of the stamping mold 4 and the lifting seat.

Furthermore, a surface of the lifting seat 2 is provided with a graduated scale 49, and the upper slide plate 38 is provided with a pointer 50 pointing to the graduated scale 49. When the hot stamping template 53 is moving, the pointer 50 on the upper slide plate 38 will also move in the graduated scale 49, so that the workers intuitively grasp a moving distance to further facilitate accurate operation and prevent misoperation.

Furthermore, bearing blocks 51 are fixed on both sides of the heating plate 46 of the stamping mold 4, a convex strip 52 is arranged inside the bearing block 51, and the convex strip 52 is inserted into a groove of the hot stamping template 52 to connect the heating plate 46 and the hot stamping template 53. The connection between the heating plate 46 and the hot stamping template 53 can be easily realized by aligning the groove of the hot stamping template 53 with the convex strip of the bearing block 51 and connecting the groove with the convex strip 52. To remove the connection, it is only needed to pull the groove out of the convex strip. Of course, in order to make the groove and the convex strip be more firmly fixed together, screws and other connectors may be used to connect the two again.

## Claims

1. A foil stamping mechanism, comprising a base (1) and a lifting seat (2), and a power rod (3) fixed on the lifting seat (2) and passing through a through hole of the base, wherein a plurality of groups of stamping molds (4) are arranged between the base (1) and the lifting seat (2), an aluminum foil driving mechanism (5) is arranged above the stamping mold (4), the aluminum foil driving mechanism (5) comprises a connecting plate (6), the connecting plate (6) is provided with an aluminum foil release roller (7), a collecting roller (8) and a plurality of guiding rollers (9), the aluminum foil release roller (7) is connected with a magnetic powder brake (10), and the collecting roller (8) is connected with a servo motor (11), wherein a monitoring device (12) is installed on one side of the connecting plate (6), the monitoring device (12) includes a photoelectric switch (13), the photoelectric switch (13) is capable of being movably installed on a guide rod (15) through a sliding sleeve (14), the guide rod (15) is fixedly connected with a lifting block (17) through a connecting block (16), the lifting block (17) is sleeved on a sliding rod (18), two ends of the sliding rod (18) are fixedly connected with a mounting block (19), the mounting block (19) is fixedly connected with the connecting plate (6), and the mounting block (19) is provided with a vertical screw stem (20) to adjust lifting of the lifting block (17).

2. The foil stamping mechanism according to claim 1, wherein a light barrier (21) and round rods (22) are installed on the connecting block (16) in front of the photoelectric switch (13), two round rods (22) are provided and are respectively located on upper and lower sides of the light barrier (21).

3. The foil stamping mechanism according to claim 2, wherein three guiding rollers (9) are arranged on upper and lower sides of the round rod (22), one lower guiding roller is located in front of the stamping mold (4), one end of the guiding roller is installed on a connector (23) through a strip groove, the other end of the guiding roller is installed on a square strip (24), and the other end of the square strip (24) is also fixed to the connecting plate (6) through another strip groove; two upper guiding rollers (9) are provided on a plane at a certain angle as to a horizontal plane, one end of the guiding roller is installed on the connector (23), and the other end of the guiding roller is installed on the connecting plate (6) by an outwardly extended convex block (25).

4. The foil stamping mechanism according to claim 1, wherein the connecting plate (6) is provided with an aluminum foil tension adjusting device (26), the adjusting device (26) comprises a limiting cylinder (27) and a swinging roller (28), a free end of the limiting cylinder (27) is movably connected with a swinging arm (29), and the other end of the limiting cylinder (27) is movably connected with the connecting plate (6); the swinging roller (28) is installed at one end of the swinging arm (29) and the other end of the swinging arm (29) is movably installed on an extension block (30) of the connecting plate (6), the other end of the swinging arm (29) is also fixed with a fork block (31), a bearing (32) is arranged in a fork mouth of the fork block (31), the bearing (32) is fixedly connected with a telescopic rod of a potentiometer (34) by a connecting arm (33), and the potentiometer (34) is fixed on a platform (35) above the connecting plate (6).

5. The foil stamping mechanism according to claim 1, wherein both the release roller (7) and the collecting roller (8) are sleeved with two opposite conical gears (36), and the conical gears (36) are fixed on the release roller (7) or the collecting roller (8) by screws passing through screw holes of the conical gears.

6. The foil stamping mechanism according to claim 1, wherein two sides of a top portion of the stamping mold (4) are connected with vertical plates (37), the vertical plate (37) perforates a through hole of an upper slide plate (38) and is fixedly connected with a hanging strip (39), and a bottom portion of the upper slide plate (38) is provided with a slide seat (40), the slide (40) is sleeved on a slide track of the lifting seat (2), an upper surface of the upper slide plate (38) is provided with a stamping mold plate lock (41), the stamping mold plate lock (41) is provided with a through hole for a screw stem (42) to pass through, the through hole is provided with a grain matched with a thread of the screw stem (42), and one end of the screw stem (42) is provided with a rotating handle or a hand wheel (43).

7. The foil stamping mechanism according to claim 6, wherein the stamping mold plate lock (41) is mainly composed of upper and lower locking blocks (44) hinged together, the lower locking block is fixed on a surface of the upper slide plate (38), opposite positions of the upper and lower locking blocks are respectively provided with semicircular grooves, the upper and lower semicircular grooves form the through hole, the grain matched with the thread of the screw stem is arranged on an inner wall of the groove of the upper locking block, and free ends of the upper and lower locking blocks are provided with magnets (45) for attracting each other.

8. The foil stamping mechanism according to claim 6, wherein a heat-resistant silicon block (47) is installed between a heating plate (46) of the stamping mold (4) and the lifting seat (2).

9. The foil stamping mechanism according to claim 6, wherein a surface of the lifting seat (2) is provided with a graduated scale (48), and the upper slide plate (38) is provided with a pointer (50) pointing to the graduated scale (49).

10. The foil stamping mechanism according to claim 6, wherein bearing blocks (51) are fixed on both sides of a heating plate (46) of the stamping mold (4), a convex strip (52) is arranged inside the bearing block (51), and the convex strip (52) is inserted into a groove of a hot stamping template to connect the heating plate (46) and the hot stamping template (53).

## Patentansprüche

1. Folienprägemechanismus umfassend eine Bodenplatte (1) und einen Hubsitz (2) und eine Antriebsstange (3), die an dem Hubsitz (2) fixiert ist und durch ein Durchgangsloch der Bodenplatte reicht, wobei eine Vielzahl von Gruppen von Prägeformen (4) zwischen der Bodenplatte (1) und dem Hubsitz (2) angeordnet sind, und ein Aluminiumfolien-Antriebsmechanismus (5) über der Prägeform (4) angeordnet ist, wobei der Aluminiumfolien-Antriebsmechanismus (5) eine Verbindungsplatte (6) umfasst, wobei die Verbindungsplatte (6) mit einer Aluminiumfolien-Ablösewalze (7), einer Sammelwalze (8) und einer Vielzahl von Führungswalzen (9) versehen ist, wobei die Aluminiumfolien-Ablösewalze (7) mit einer Magnetpulverbremse (10) verbunden ist und die Sammelwalze (8) mit einem Servomotor (11) verbunden ist, wobei eine Überwachungsvorrichtung (12) auf einer Seite der Verbindungsplatte (6) installiert ist, die Überwachungsvorrichtung (12) einen photoelektrischen Schalter (13) beinhaltet, wobei der photoelektrische Schalter (13) geeignet ist, durch eine Schiebehülse (14) beweglich auf einer Führungsstange (15) installiert zu werden, die Führungsstange (15) durch einen Verbindungsblock (16) fest mit einem Hubblock (17) verbunden ist, der Hubblock (17) auf eine Gleitstange (18) aufgesteckt ist, zwei Enden der Gleitstange (18) fest mit einem Montageblock (19) verbunden sind, wobei der Montageblock (19) fest mit der Verbindungsplatte (6) verbunden ist, und der Montageblock (19) mit einem vertikalen Schraubenschaft (20) versehen ist, um den Hub des Hubsitzes (17) einzustellen.

2. Folienprägemechanismus gemäß Anspruch 1, wobei eine Lichtschranke (21) und Rundstäbe (22) auf dem Verbindungsblock (16) vor dem photoelektrischen Schalter (13) installiert sind, zwei Rundstäbe (22) vorgesehen sind und jeweils an oberen und unteren Seiten der Lichtschranke (21) angeordnet sind.

3. Folienprägemechanismus gemäß Anspruch 2, wobei drei Führungswalzen (9) an oberen und unteren Seiten des Rundstabes (22) angeordnet sind, eine untere Führungswalze vor der Prägeform (4) angeordnet ist, ein Ende der Führungswalze auf durch eine Streifennut an einem Verbinder (23) installiert ist, wobei des andere Ende der Führungswalze an einem Vierkantband (24) installiert ist, und das andere Ende des Vierkantbandes (24) durch eine weitere Streifennut auch an der Verbindungsplatte (6) befestigt ist; wobei zwei obere Führungswalzen (9) in einer Ebene mit einem bestimmten Winkel gegenüber einer horizontalen Ebene vorgesehen sind, ein Ende der Führungswalze an dem Verbinder (23) installiert ist und das andere Ende der Verbindungswalze durch einen nach außen verlängerten konvexen Block (25) an der Verbindungsplatte (6) installiert ist.

4. Folienprägemechanismus gemäß Anspruch 1, wobei die Verbindungsplatte (6) mit einer Aluminiumfolien-Spannungsanpassungsvorrichtung (26) versehen ist, wobei die Anpassungsvorrichtung (26) einen Begrenzungszylinder (27) und eine Pendelwalze (28) umfasst, wobei ein freies Ende des Begrenzungszylinders (27) beweglich mit einem Pendelarm (29) verbunden ist und das andere Ende des Begrenzungszylinders (27) beweglich mit der Verbindungsplatte (6) verbunden ist; wobei die Pendelwalze (28) an einem Ende des Pendelarms (29) installiert ist und das andere Ende des Pendelarms (29) beweglich auf einem Verlängerungsblock (30) der Verbindungsplatte (6) installiert ist, das andere Ende des Pendelarms (29) auch mit einem Gabelblock (31) fixiert ist, ein Lager (32) in einem Gabelmund des Gabelblocks (31) angeordnet ist, wobei das Lager (32) durch einen Verbindungsarm (33) fest mit einem Teleskopstab eines Potentiometers (34) verbunden ist und das Potentiometer (34) auf einer Plattform (35) über der Verbindungsplatte (6) fixiert ist.

5. Folienprägemechanismus gemäß Anspruch 1, wobei sowohl die Ablösewalze (7) als auch die Sammelwalze (8) mit zwei entgegengesetzten konischen Zahnrädern (36) gebunden sind und die konischen Zahnräder (36) durch Schrauben, welche durch Schraubenlöcher der konischen Zahnräder hindurchgehen, an der Ablösewalze (7) oder der Sammelwalze (8) befestigt sind.

6. Folienprägemechanismus gemäß Anspruch 1, wobei zwei Seiten eines oberen Abschnitts der Prägeform (4) mit vertikalen Platten (37) verbunden sind, wobei die vertikale Platte (37) ein Durchgangsloch einer oberen Gleitplatte (38) perforiert und mit einem Hängestreifen (39) fest verbunden ist, und ein Bodenabschnitt der oberen Gleitplatte (38) mit einem Gleitsitz (40) versehen ist, wobei der Gleiter (40) an eine Gleitbahn des Hubsitzes (2) gebunden ist, eine obere Fläche der oberen Gleitplatte (38) mit einer Prägeformplattenverriegelung (41) versehen ist, wobei die Prägeformplattenverriegelung (41) mit einem Durchgangsloch zum Durchführen eines Schraubenschafts (42) versehen ist, wobei das Durchgangloch mit einer Körnung versehen ist, die mit einem Gewinde des Schraubenschafts (42) übereinstimmt und ein Ende der Schraubenschafts (42) mit einem Drehgriff oder einem Handrad (43) versehen ist.

7. Folienprägemechanismus gemäß Anspruch 6, wobei die Prägeformplattenverriegelung (41) im Wesentlichen aus oberen und unteren Verriegelungsblöcken (44) besteht, die gelenkig miteinander verbunden sind, wobei der untere Verriegelungsblock an einer Oberfläche der oberen Gleitplatte (38) fixiert ist, gegenüberliegende Positionen der oberen und unteren Verriegelungsblöcke jeweils mit halbkreisförmigen Nuten versehen sind, wobei die oberen und unteren halbkreisförmigen Nuten ein Durchgangsloch ausbilden, und wobei das mit dem Gewinde des Schraubenschafts übereinstimmende Korn an einer Innenwand der Nut des oberen Verriegelungsblocks angeordnet ist und freie Enden der oberen und unteren Verriegelungsblöcke mit Magneten (45) versehen sind, um sich gegenseitig anzuziehen.

8. Folienprägemechanismus gemäß Anspruch 6, wobei ein hitzebeständiger Silikonblock (47) zwischen einer Heizplatte (46) der Prägeform (4) und dem Hubsitz (2) installiert ist.

9. Folienprägemechanismus gemäß Anspruch 6, wobei eine Oberfläche des Hubsitzes (2) mit einer abgestuften Skala (48) versehen ist, und die obere Gleitplatte (38) mit einem Zeiger (50) versehen ist, der auf die abgestufte Skala (49) zeigt.

10. Folienprägemechanismus gemäß Anspruch 6, wobei Lagerblöcke (51) an beiden Seiten der Heizplatte (46) der Prägeform (4) fixiert sind, ein konvexer Streifen (52) in dem Lagerblock (51) angeordnet ist, und der konvexe Streifen (52) in eine Nut einer Heißprägeschablone eingesetzt ist, um die Heizplatte (46) und die Heißprägeschablone (53) zu verbinden.

## Revendications

1. Mécanisme d'estampage comprenant une base (1) et un siège de levage (2), et une tige d'actionnement (3) fixée sur le siège de levage (2) et passant par un trou débouchant de la base, dans lequel une pluralité de groupes de moules d'estampage (4) sont agencés entre la base (1) et le siège de levage (2), un mécanisme d'entraînement de feuille d'aluminium (5) est agencé au-dessus du moule d'estampage (4), le mécanisme d'entraînement de feuille d'aluminium (5) comprend une plaque de raccordement (6), la plaque de raccordement (6) est prévue avec un rouleau de libération de feuille d'aluminium (7), un rouleau de collecte (8) et une pluralité de rouleaux de guidage (9), le rouleau de libération de feuille d'aluminium (7) est raccordé avec un frein à poudre magnétique (10) et le rouleau de collecte (8) est raccordé à un servomoteur (11), dans lequel un dispositif de surveillance (12) est installé sur un côté de la plaque de raccordement (6), le dispositif de surveillance (12) comprend un commutateur photoélectrique (13), le commutateur photoélectrique (13) peut être installé de manière mobile sur une tige de guidage (15) par le biais d'un manchon coulissant (14), la tige de guidage (15) est raccordée de manière fixe à un bloc de levage (17) par le biais d'un bloc de raccordement (16), le bloc de levage (17) est emmanché sur une tige de coulissement (18), deux extrémités de la tige de coulissement (18) sont fixement raccordées à un bloc de montage (19), le bloc de montage (19) est fixement raccordé à la plaque de raccordement (6) et le bloc de montage (19) est prévu avec une tige de vis verticale (20) pour régler le levage du bloc de levage (17).

2. Mécanisme d'estampage selon la revendication 1, dans lequel une barrière de lumière (21) et des tiges arrondies (22) sont installées sur le bloc de raccordement (16) en face du commutateur photoélectrique (13), deux tiges arrondies (22) sont prévues et sont respectivement positionnées sur les côtés supérieur et inférieur de la barrière de lumière (21).

3. Mécanisme d'estampage selon la revendication 2, dans lequel trois rouleaux de guidage (9) sont agencés sur les côtés supérieur et inférieur de la tige ronde (22), un rouleau de guidage inférieur est positionné en face du moule d'estampage (4), une extrémité du rouleau de guidage est installée sur un connecteur (23) par le biais d'une rainure de bande, l'autre extrémité du rouleau de guidage est installée sur une bande carrée (24), et l'autre extrémité de la bande carrée (24) est également fixée sur la plaque de raccordement (6) par le biais d'une autre rainure de bande ; deux rouleaux de guidage supérieurs (9) sont prévus sur un plan à un certain angle en tant que plan horizontal, une extrémité du rouleau de guidage est installée sur le connecteur (23) et l'autre extrémité du rouleau de guidage est installée sur la plaque de raccordement (6) par un bloc convexe étendu vers l'extérieur (25).

4. Mécanisme d'estampage selon la revendication 1, dans lequel la plaque de raccordement (6) est prévue avec un dispositif de réglage de tension de feuille d'aluminium (26), le dispositif de réglage (26) comprend un cylindre limiteur (27) et un rouleau oscillant (28), une extrémité libre du cylindre limiteur (27) est raccordée de manière mobile avec un bras oscillant (29), et l'autre extrémité du cylindre limiteur (27) est raccordée de manière mobile avec la plaque de raccordement (6) ; le rouleau oscillant (28) est installé au niveau d'une extrémité du bras oscillant (29) et l'autre extrémité du bras oscillant (29) est installée, de manière mobile, sur un bloc d'extension (30) de la plaque de raccordement (6), l'autre extrémité du bras oscillant (29) est également fixée avec un bloc de fourche (31), un palier (32) est agencé dans une embouchure de fourche du bloc de fourche (31), le palier (32) est raccordé, de manière fixe, avec une tige télescopique d'un potentiomètre (34) par un bras de raccordement (33), et le potentiomètre (34) est fixé sur une plateforme (35) au-dessus de la plaque de raccordement (6).

5. Mécanisme d'estampage selon la revendication 1, dans lequel à la fois le rouleau de libération (7) et le rouleau de collecte (8) sont emmanchés avec deux engrenages coniques (36) opposés, et les engrenages coniques (36) sont fixés sur le rouleau de libération (7) ou le rouleau de collecte (8) par des vis passant par des trous de vis des engrenages coniques.

6. Mécanisme d'estampage selon la revendication 1, dans lequel deux côtés d'une partie supérieure du moule d'estampage (4) sont raccordés avec les plaques verticales (37), la plaque verticale (37) perfore un trou débouchant d'une plaque de coulissement supérieure (38) et est fixement raccordée avec une bande de suspension (39), et une partie de fond de la plaque de coulissement supérieure (38) est prévue avec un siège de coulissement (40), la glissière (40) est emmanchée sur un rail de coulissement du siège de levage (2), une surface supérieure de la plaque de coulissement supérieure (38) est prévue avec un verrou de plaque de moule d'estampage (41), le verrou de plaque de moule d'estampage (41) est prévu avec un trou débouchant pour qu'une tige de vis (42) passe à travers, le trou débouchant est prévu avec un grain correspondant à un filetage de la tige de vis (42), et une extrémité de la tige de vis (42) est prévue avec une poignée rotative ou un volant (43).

7. Mécanisme d'estampage selon la revendication 6, dans lequel le verrou de plaque de moule d'estampage (41) est principalement composé de blocs de verrouillage supérieur et inférieur (44) articulés ensemble, le bloc de verrouillage inférieur est fixé sur une surface de la plaque de coulissement supérieure (38), les positions opposées des blocs de verrouillage supérieur et inférieur sont respectivement prévues avec des rainures semi-circulaires, les rainures semi-circulaires supérieure et inférieure forment le trou débouchant, le grain correspondant au filetage de la tige de vis est agencé sur une paroi interne de la rainure du bloc de verrouillage supérieur, et les extrémités libres des blocs de verrouillage supérieur et inférieur sont prévues avec des aimants (45) pour s'attirer.

8. Mécanisme d'estampage selon la revendication 6, dans lequel un bloc de silicone thermorésistant (47) est installé entre une plaque de chauffage (46) du moule d'estampage (4) et le siège de levage (2).

9. Mécanisme d'estampage selon la revendication 6, dans lequel une surface du siège de levage (2) est prévue avec une échelle graduée (48), et la plaque de coulissement supérieure (38) est prévue avec un pointeur (50) pointant vers l'échelle graduée (49).

10. Mécanisme d'estampage selon la revendication 6, dans lequel des blocs de palier (51) sont fixés des deux côtés d'une plaque de chauffage (46) du moule d'estampage (4), une bande convexe (52) est agencée à l'intérieur du bloc de palier (51), et la bande convexe (52) est insérée dans une rainure d'un gabarit d'estampage à chaud pour raccorder la plaque de chauffage (46) et le gabarit d'estampage à chaud (53).
